# EUROPEAN PATENT SPECIFICATION

(11) **EP 4 042 738 B1**
(45) Date of publication and mention of the grant of the patent: **25.12.2024**
(21) Application number: 20792698.1
(22) Date of filing: 06.10.2020
(51) Int. Cl.: H04W 24/00, G06F 11/30, H04L 43/08

(54) **ENERGY CONSUMPTION ANALYSIS OF MULTI-OPERATOR COMMUNICATION NETWORK SITE**
ENERGIEVERBRAUCHSANALYSE EINES KOMMUNIKATIONSNETZWERKSTANDORTS MIT MEHREREN BETREIBERN
ANALYSE DE LA CONSOMMATION D'ÉNERGIE D'UN SITE D'UN RÉSEAU DE COMMUNICATION À OPÉRATEURS MULTIPLES

(30) Priority: 09.10.2019 FI 20195863
(43) Date of publication of application: 17.08.2022
(73) Proprietor: Elisa Oyj, 00520 Helsinki (FI)
(72) Inventor: SUNILA, Karri, 00520 Helsinki (FI)
(74) Representative: Espatent Oy
(86) International application number: PCT/FI2020/050659
(87) International publication number: WO 2021/069796

(56) References cited:
- WO-A2-02/07365
- WO-A2-2010/065197
- CN-A- 107 846 688
- US-A1- 2011 106 316
- US-A1- 2016 224 047

## Description

### TECHNICAL FIELD

The present application generally relates to energy consumption analysis of a multi-operator communication network site.

### BACKGROUND

This section illustrates useful background information without admission of any technique described herein representative of the state of the art.

Communication networks consume significant amount of energy. As data amounts and data speeds increase, the energy consumption increases, too. On the other hand, for environmental reasons, there is a desire to optimize energy consumption. In order to make educated decisions on management of the network there is a need to know energy consumption in different parts of the network.

A simple solution is to use electricity meters to measure consumed energy, but this is not always possible. There may be for example one electricity meter that measures energy that is consumed by a network site that may comprise a plurality individually and independently managed equipment sections. Owner of the site may for example rent one or more equipment sections to other parties. In such case, one operator owns the site and rents equipment space to other operators, whereby the site may comprise a plurality of base stations and other network equipment of different operators. The site may be otherwise divided into separately managed equipment sections, too. Nevertheless, one electricity meter typically measures energy consumption of the whole site. In such case, default energy consumption of the devices in different equipment sections can be used as a basis for estimating energy consumption of respective equipment sections, but such estimates are not accurate and may lead in that changes in energy consumption of individual sections of the site go unnoticed. CN 107 846 688 discloses a communication network site shared by operators. US 2016/224047 and WO 02/07365 disclose conventional energy measurements of such communication network sites. US 2011/106316 and WO 2010/065197 disclose that energy consumption of a particular device can be determined from a total energy consumption of multiple devices by powering the particular device off and on.

Now a new approach is provided for analyzing energy consumption in multi-operator sites.

### SUMMARY

Various aspects of examples of the invention are set out in the claims. Any devices and/or methods in the description and/or drawings which are not covered by the claims are examples useful for understanding the invention.

According to a first example aspect of the present invention, there is provided a computer implemented method of claim 1.

In an embodiment, the method further comprises comparing the first estimate of energy consumption to a second, earlier estimate set for the first section, and outputting result of said comparison. The result of the comparison can be used for checking whether the first section operates differently than assumed.

In an embodiment, the detected change is temporary decrease of the first magnitude in total power consumption.

In an embodiment, the maintenance work comprises at least one of: changing physical devices, changing settings in physical devices, adding new physical devices.

In an embodiment, receiving total energy consumption values comprises receiving a plurality of values per day for a period of a plurality of days.

In an embodiment, the method further comprises detecting maintenance work taking place in more than one section, and responsively ignoring the detected change of the total energy consumption.

In an embodiment, detecting the change of the first magnitude in the total energy consumption is performed based on comparison of the total energy consumption value at the first point of time to one or more previous total energy consumption values.

In an embodiment, detecting the change of the first magnitude in the total energy consumption comprises ignoring changes whose magnitude is below a threshold.

In an embodiment, detecting the change of the first magnitude in the total energy consumption comprises ignoring changes whose duration is below a threshold.

In an embodiment, detecting the change of the first magnitude in the total energy consumption comprises confirming that the total energy consumption at the first point of time is above 0.

In an embodiment, the method is periodically repeated.

According to a second example aspect of the present invention, there is provided an apparatus according to claim 13.

According to a third example aspect of the present invention, there is provided a computer program according to claim 14.

The computer program of the third aspect may be a computer program product stored on a non-transitory memory medium.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows an example scenario according to an embodiment;
Fig. 2 shows an apparatus according to an embodiment;
Fig. 3A and 3B show flow diagrams illustrating example methods according to certain embodiments;
Fig. 4 shows a graph of an example of daily total energy consumption; and
Fig. 5 shows graphs of example of hourly total energy consumption values.

### DETAILED DESCRIPTON OF THE DRAWINGS

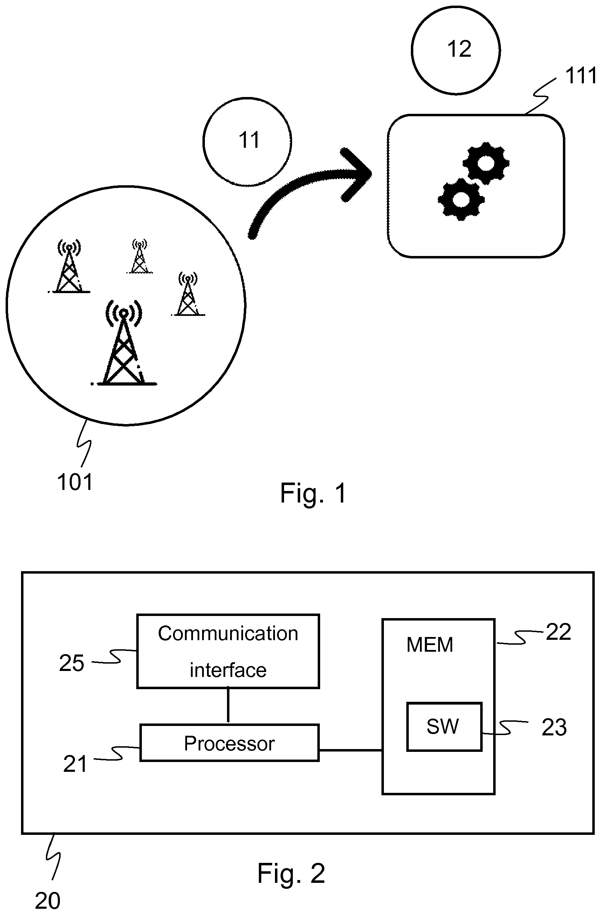

Example embodiments of the present invention and its potential advantages are understood by referring to Figs. 1 through 5 of the drawings. In this document, like reference signs denote like parts or steps.

Example embodiments of the invention provide energy consumption analysis of a multi-operator communication network site based on changes in total consumed energy and knowledge about maintenance work taking place in different equipment sections of the site. The term multi-operator site refers to an entity that comprises a plurality of individually and independently managed equipment sections. The equipment sections may be for example equipment sections of different network operators or otherwise separately managed equipment sections. Example embodiments are suitable in situations where only total energy consumption of a whole site is available and measured energy consumption of the plurality of individually and independently managed equipment sections is not available or the information is not reliable if available.

During maintenance work respective equipment section is in general shut down. Example embodiments are based on using information about the maintenance work to identify which equipment section causes changes in total energy consumption. If an equipment section is shut down, it does not consume energy and based on this the magnitude of the change in total energy consumption is used as an estimate of energy consumption of respective equipment section. When the equipment section is shut down for maintenance work, there is a decrease in total energy consumption, and when the equipment section is turned on after completion of maintenance work or after completion of setup, there is an increase in total energy consumption. The decrease/increase is usually a stepwise change that can be easily identified.

The maintenance work may comprise at least one of: changing physical devices, changing settings in physical devices, adding new physical devices.

Fig. 1 shows an example scenario according to an embodiment. The scenario shows a communication network 101 comprising a plurality of physical network sites comprising base stations and other network devices, and an automation system 111 configured to implement automatic energy consumption analysis according to example embodiments.

In an embodiment of the invention the scenario of Fig. 1 operates as follows: In phase 11, the automation system 111 receives total energy consumption values of a network site. The network site is divided into two or more individually and independently managed equipment sections. The total energy consumption values may be received or collected for example from an electricity meter or from some other system capable of providing the energy consumption values.

In phase 12, the automation system 111 analyses the received total energy consumption values and detects a change in the total energy consumption. The change may be a decrease or an increase in the total consumption values. In an embodiment, one or more checks are being made to ensure that the change is significant before proceeding. E.g. magnitude and/or duration of the change may be checked. Insignificant changes may be ignored.

Responsive to detecting the change in the total energy consumption, the automation system obtains information about maintenance work taking place in the site. If it is detected that there is maintenance work taking place in a first section of the site substantially at the same time with the change in the total energy consumption, it is concluded that magnitude of the change represents a first estimate of energy consumption of the first section. Substantially at the same time herein refers to that the maintenance work take place during duration of the change in the total energy consumption. The information about the maintenance work may be obtained from an external source such as a database storing such information.

The first estimate is then output, and the output may be used as a basis for further actions. The first estimate may be compared to a second estimate and the result of the comparison may be used as a basis for further actions. The second estimate may be assumed energy consumption. Deviation from the assumed energy consumption may be an indication of wrongly operating equipment and therefore the result of the comparison provides the technical effect of ability to identify malfunctioning equipment section or equipment section that does not work as intended.

It is to be noted that analysis of single site is discussed, but multiple sites may be analysed in parallel. The process may be manually or automatically triggered. Additionally or alternatively, the process may be periodically repeated. The process may be repeated for example once a week, every two weeks, once a month, or every two months. By periodically repeating the process, the estimates of energy consumption automatically adapt to changes in the network load and usage patterns.

Energy consumption values may be collected for a plurality of days and/or a plurality of values per day may be collected. For example, hourly values may be collected.

Fig. 2 shows an apparatus 20 according to an embodiment. The apparatus 20 is for example a general-purpose computer or server or some other electronic data processing apparatus. The apparatus 20 can be used for implementing embodiments of the invention. That is, with suitable configuration the apparatus 20 is suited for operating for example as the automation system 111 of foregoing disclosure.

The general structure of the apparatus 20 comprises a processor 21, and a memory 22 coupled to the processor 21. The apparatus 20 further comprises software 23 stored in the memory 22 and operable to be loaded into and executed in the processor 21. The software 23 may comprise one or more software modules and can be in the form of a computer program product. Further, the apparatus 20 comprises a communication interface 25 coupled to the processor 21.

The processor 21 may comprise, e.g., a central processing unit (CPU), a microprocessor, a digital signal processor (DSP), a graphics processing unit, or the like. Fig. 2 shows one processor 21, but the apparatus 20 may comprise a plurality of processors.

The memory 22 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 20 may comprise a plurality of memories.

The communication interface 25 may comprise communication modules that implement data transmission to and from the apparatus 20. The communication modules may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as Ethernet or universal serial bus (USB), for example. Further the apparatus 20 may comprise a user interface (not shown) for providing interaction with a user of the apparatus. The user interface may comprise a display and a keyboard, for example. The user interaction may be implemented through the communication interface 25, too.

A skilled person appreciates that in addition to the elements shown in Fig. 2, the apparatus 20 may comprise other elements, such as displays, as well as additional circuitry such as memory chips, application-specific integrated circuits (ASIC), other processing circuitry for specific purposes and the like. Further, it is noted that only one apparatus is shown in Fig. 2, but the embodiments of the invention may equally be implemented in a cluster of shown apparatuses.

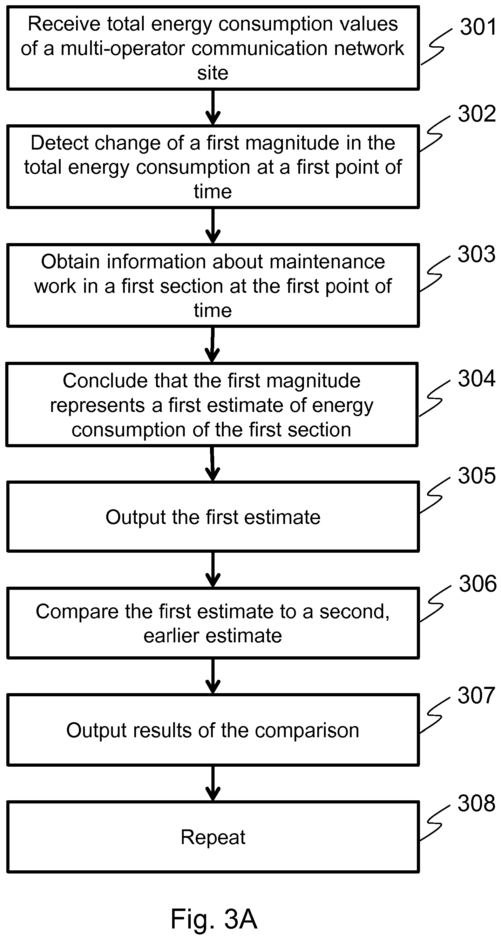

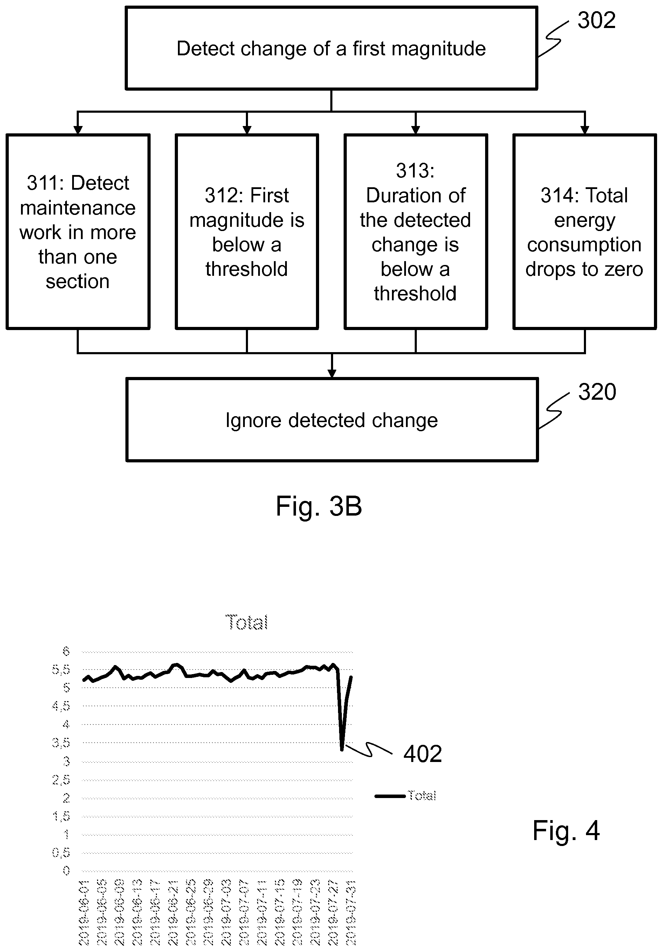

Fig. 3A and 3B show flow diagrams illustrating example methods according to certain embodiments. The methods may be implemented in the automation system 111 of Fig. 1 and/or in the apparatus 20 of Fig. 2. The methods are implemented in a computer and do not require human interaction unless otherwise expressly stated. It is to be noted that the methods may however provide output that may be further processed by humans and/or the methods may require user input to start. Different phases shown in Fig. 3A and 3B may be combined with each other and the order of phases may be changed except where otherwise explicitly defined. Furthermore, it is to be noted that performing all phases of the flow charts is not mandatory.

The method of Fig. 3A comprises following phases:
Phase 301: Total energy consumption values of a multi-operator communication network site are received. The network site is divided into two or more individually and independently managed equipment sections. The total energy consumption values may be received or collected for example from an electricity meter or from some other system capable of providing the energy consumption values.
Phase 302: Analysis of the received total energy consumption values is started and a change of a first magnitude in the total energy consumption is detected at a first point of time. The change may be a decrease or an increase in the total consumption values. The change may be detected based on comparison of the total energy consumption value at the first point of time to one or more previous total energy consumption values.
Phase 303: Information about maintenance work taking place in a first section of the site at the first point of time is obtained from an external source. The external source may be for example an external database. It is to be noted that the change in total energy consumption and the maintenance work do not need to occur at exactly the same time. Instead it suffices that these overlap. If information about maintenance work is not obtained (e.g. there is no maintenance work taking place) the change is ignored, and the process may start from the beginning.

In an embodiment, before proceeding, one or more checks are being made in phases 302 and/or 303 to ensure that the change is significant and/or suitable for making estimates. Such checks are discussed in more detail in connection with Fig. 3B.

Phase 304: It is concluded that the first magnitude represents a first estimate of energy consumption of the first section of the site.

Phase 305: The first estimate of energy consumption is output. The output may be used as a basis for further actions.

Phase 306: In an embodiment, the first estimate is compared to a second, earlier estimate.

Phase 307: The result of the comparison is output. Also this output may be used as a basis for further actions.

The further actions in phases 305 and 307 may comprise for example updating energy consumption estimates, identifying anomalies in energy consumption, adjusting spare power requirements etc. Still further, the first estimate and/or the result of the comparison may be used for identifying equipment sections that operate differently than assumed. For example, malfunctioning equipment sections may be identified.

Phase 308: The process is repeated for example periodically. The process may be repeated for example once a week, every two weeks, once a month, or every two months.

The method of Fig. 3B concerns more detailed example relating to checks associated with detecting the change and a process of selectively ignoring certain changes. The method of Fig. 3B comprises following phases:
Phase 302: A change of a first magnitude in the total energy consumption is detected. Before proceeding to making estimates, additional conditions are checked in phases 311-314 to ensure that the change is significant and/or suitable for making estimates.
Phase 311: It is checked if maintenance work is taking place in more than one section of the site. If this is true, then the detected change is not suitable for making estimates and the process proceeds to phase 320 to ignore the detected change.
Phase 312: It is checked if the first magnitude is below a threshold. If this is true, then the detected change is not significant, and the process proceeds to phase 320 to ignore the detected change. The threshold may be for example 500W, 700W or 1kW or some other selected value. In this way minor changes can be easily ignored.
Phase 313: It is checked if duration of the detected change is below a threshold. If this is true, then the detected change is not significant, and the process proceeds to phase 320 to ignore the detected change. The threshold may be for example one hour. In this way temporary, short-term changes can be easily ignored.
Phase 314: It is checked if the total energy consumption has dropped to zero. If this is true, then the whole site is down (there may be power outage for example) and the detected change is not suitable for making estimates and the process proceeds to phase 320 to ignore the detected change.
Phase 320: If one or more of the checks in phases 311-314 yields true, the detected change is ignored. That is, no further action is taken, and the process may start from the beginning.

Fig. 4 shows a graph of an example of daily total energy consumption. The graph shows total energy consumption for a period between 1 June 2019 and 31 July 2019. The graph shows a dip 402 on 27 July 2019 in the total energy consumption. This dip 402 is a change that can be detected in an analysis according to example embodiments.

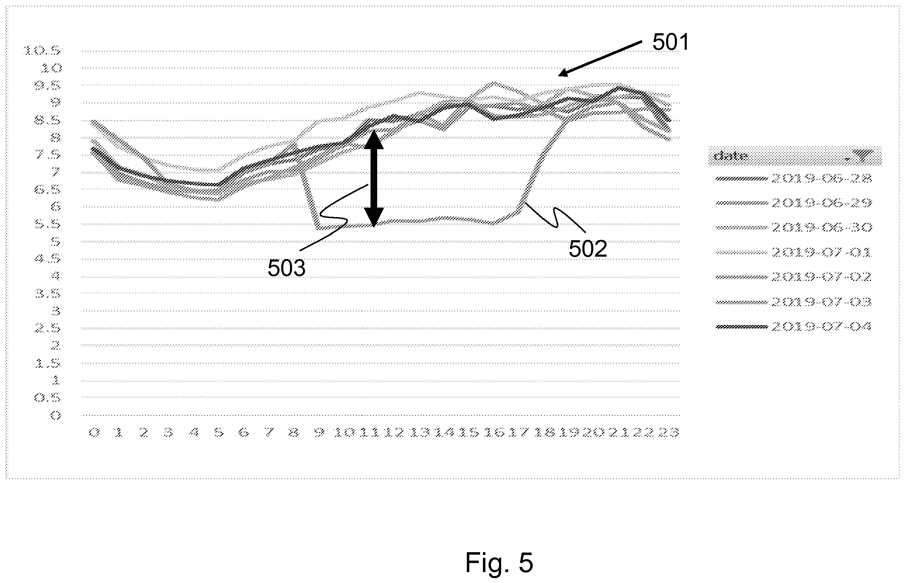

Fig. 5 shows graphs of example of hourly total energy consumption values. The graphs show hourly values 501 for 7 consecutive days between 28 June 2019 and 4 July 2019. The graphs show a dip 502 on 2 July 2019 in the total energy consumption, whereas on the other days the consumption graphs are more or less similar. This dip 502 is a change that can be detected in an analysis according to example embodiments. Arrow 503 illustrates estimated magnitude of the detected change.

Without in any way limiting the scope, interpretation, or application of the claims appearing below, a technical effect of one or more of the example embodiments disclosed herein is ability to obtain improved estimates of the energy consumption of individual sections of a multi-operator site of a communication network. Another technical effect of one or more of the example embodiments disclosed herein is that as the estimates are based on actual energy consumption numbers, the estimate reflects actual spent energy that may vary depending on amount of traffic that flows through the equipment of the section of the site. In this way the estimates take into account changes in energy consumption.

Another technical effect of one or more of the example embodiments disclosed herein is that as a more accurate estimates of the energy consumption of the individual sections of the sites can be obtained, educated decisions on management of the network can be made. For example, equipment that consumes significant amount of energy can be identified and corrective actions to reduce energy consumption can be made. Additionally or alternatively, management of requirements of spare power sources or cooling equipment can be improved as actual energy consumption is being determined.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications, which may be made without departing from the scope of the present invention as defined in the appended claims.

## Claims

1. A computer implemented method of energy consumption analysis of a communication network site, the method performed by a computer apparatus, the method comprising:
receiving (301) total energy consumption values of the communication network site, wherein the site is divided into two or more equipment sections that are individually and independently managed by different operators' entities, and the total energy consumption covers energy consumption of the whole site, and
finding out a first estimate of the energy consumption of at least one of the equipment sections by:
detecting (302) a change of a first magnitude in the total energy consumption at a first point of time,
obtaining (303), from a source external to the computer apparatus, information about maintenance work taking place in a first equipment section of the communication network site at the first point of time, and
outputting (305) the first magnitude as the first estimate of the energy consumption of the first equipment section

2. The method of claim 1, further comprising comparing (306) the first estimate of energy consumption to a second, earlier estimate set for the first equipment section, and
outputting (307) result of said comparison.

3. The method of claim 2, further comprising using the result of the comparison for checking whether the first equipment section operates differently than assumed

4. The method of any preceding claim, wherein the detected change is temporary decrease of the first magnitude in total power consumption.

5. The method of any preceding claim, wherein the maintenance work comprises at least one of: changing physical devices, changing settings in physical devices, adding new physical devices.

6. The method of any preceding claim, wherein receiving total energy consumption values comprises receiving a plurality of values per day for a period of a plurality of days.

7. The method of any preceding claim, further comprising detecting (311) maintenance work taking place in more than one equipment section, and responsively ignoring (320) the detected change of the total energy consumption.

8. The method of any preceding claim, wherein detecting the change of the first magnitude in the total energy consumption is performed based on comparison of the total energy consumption value at the first point of time to one or more previous total energy consumption values.

9. The method of any preceding claim, wherein detecting the change of the first magnitude in the total energy consumption comprises ignoring changes whose magnitude is below a threshold (312, 320).

10. The method of any preceding claim, wherein detecting the change of the first magnitude in the total energy consumption comprises ignoring changes whose duration is below a threshold (313, 320).

11. The method of any preceding claim, wherein detecting the change of the first magnitude in the total energy consumption comprises confirming that the total energy consumption at the first point of time is above 0 (314, 320).

12. The method of any preceding claim, further comprising periodically repeating (308) the method.

13. A computer apparatus (20, 111) comprising:
a processor (21), and
a memory (22) including computer program code; the memory and the computer program code configured to, with the processor, cause the computer apparatus to perform the method of any one of claims 1-12.

14. A computer program comprising computer executable program code (23) which when executed by a processor causes a computer apparatus (20, 111) to perform the method of any one of claims 1-12.

## Patentansprüche

1. Computerimplementiertes Verfahren zur Analyse von Energieverbrauch eines Standorts eines Kommunikationsnetzwerks, wobei das Verfahren von einem Computergerät ausgeführt wird, wobei das Verfahren umfasst:
Empfangen (301) von Gesamtenergieverbrauchswerten des Standorts des Kommunikationsnetzwerks, wobei der Standort in zwei oder mehr Ausrüstungsabschnitte unterteilt ist, die einzeln und unabhängig von Einheiten verschiedener Betreiber verwaltet werden, und der Gesamtenergieverbrauch den Energieverbrauch des gesamten Standorts abdeckt, und
Ermittlung einer ersten Schätzung des Energieverbrauchs von mindestens einem der Ausrüstungsabschnitte durch:
Erfassen (302) einer Änderung einer ersten Größenordnung bei dem Gesamtenergieverbrauch zu einem ersten Zeitpunkt,
Erhalten (303) von Informationen über Wartungsarbeiten, die in einem ersten Ausrüstungsabschnitt des Standorts des Kommunikationsnetzwerks zu dem ersten Zeitpunkt stattfinden, von einer Quelle außerhalb des Computergeräts, und
Ausgeben (305) der ersten Größenordnung als die erste Schätzung des Energieverbrauchs des ersten Ausrüstungsabschnitts.

2. Verfahren nach Anspruch 1, ferner umfassend Vergleichen (306) der ersten Schätzung des Energieverbrauchs mit einer zweiten, früheren Schätzung, die für den ersten Ausrüstungsabschnitt eingestellt wurde, und
Ausgeben (307) des Ergebnisses des Vergleichs.

3. Verfahren nach Anspruch 2, ferner umfassend Verwendung des Ergebnisses des Vergleichs zur Überprüfung, ob der erste Ausrüstungsabschnitt anders als angenommen arbeitet.

4. Verfahren nach einem der vorhergehenden Ansprüche, wobei die erfasste Änderung eine vorübergehende Abnahme der ersten Größenordnung des Gesamtstromverbrauchs ist.

5. Verfahren nach einem der vorhergehenden Ansprüche, wobei die Wartungsarbeiten mindestens umfassen eines von: Austausch physischer Vorrichtungen, Änderung von Einstellungen in physischen Vorrichtungen, Hinzufügen neuer physischer Vorrichtungen.

6. Verfahren nach einem der vorhergehenden Ansprüche, wobei Empfangen von Gesamtenergieverbrauchswerten Empfangen einer Vielzahl von Werten pro Tag für einen Zeitraum von einer Vielzahl von Tagen umfasst.

7. Verfahren nach einem der vorhergehenden Ansprüche, ferner umfassend Erfassen (311) von Wartungsarbeiten, die in mehr als einem Ausrüstungsabschnitt stattfinden, und darauffolgendes Ignorieren (320) der erfassten Änderung des Gesamtenergieverbrauchs.

8. Verfahren nach einem der vorhergehenden Ansprüche, wobei Erfassen der Änderung der ersten Größenordnung des Gesamtenergieverbrauchs auf der Grundlage eines Vergleichs des Gesamtenergieverbrauchswerts zu dem ersten Zeitpunkt mit einem oder mehreren vorherigen Gesamtenergieverbrauchswerten durchgeführt wird.

9. Verfahren nach einem der vorhergehenden Ansprüche, wobei Erfassen der Änderung der ersten Größenordnung des Gesamtenergieverbrauchs Ignorieren von Änderungen umfasst, deren Größenordnung unter einem Schwellenwert liegt (312, 320).

10. Verfahren nach einem der vorhergehenden Ansprüche, wobei Erfassen der Änderung der ersten Größenordnung des Gesamtenergieverbrauchs Ignorieren von Änderungen umfasst, deren Dauer unter einem Schwellenwert liegt (313, 320).

11. Verfahren nach einem der vorhergehenden Ansprüche, wobei Erfassen der Änderung der ersten Größenordnung des Gesamtenergieverbrauchs Bestätigen umfasst, dass der Gesamtenergieverbrauch zu dem ersten Zeitpunkt über 0 liegt (314, 320).

12. Verfahren nach einem der vorhergehenden Ansprüche, ferner umfassend periodisches Wiederholen (308) des Verfahrens.

13. Computergerät (20, 111), umfassend:
einen Prozessor (21), und
einen Speicher (22), der Computerprogrammcode enthält; wobei der Speicher und der Computerprogrammcode so konfiguriert sind, dass sie mit dem Prozessor das Computergerät veranlassen, das Verfahren nach einem der Ansprüche 1-12 durchzuführen.

14. Computerprogramm, umfassend computerausführbaren Programmcode (23), der bei Ausführung durch einen Prozessor ein Computergerät (20, 111) veranlasst, das Verfahren nach einem der Ansprüche 1-12 durchzuführen.

## Revendications

1. Un procédé mis en oeuvre par ordinateur, d'analyse de la consommation d'énergie d'un site de réseau de communication, le procédé étant exécuté par un appareil informatique, le procédé comprenant :
le fait (301) de recevoir des valeurs de consommation d'énergie totale du site de réseau de communication, le site étant divisé en deux ou plusieurs sections d'équipement qui sont gérées individuellement et indépendamment par des entités d'opérateurs différents, et la consommation d'énergie totale couvre la consommation d'énergie de l'ensemble du site, et
le fait de trouver une première estimation de la consommation d'énergie d'au moins une des sections d'équipement en :
détectant (302) un changement d'une première grandeur dans la consommation d'énergie totale à un premier instant,
obtenant (303), à partir d'une source externe à l'appareil informatique, des informations sur des travaux de maintenance ayant lieu dans une première section d'équipement du site de réseau de communication au premier instant, et
délivrant en sortie (305) la première grandeur en tant que première estimation de la consommation d'énergie de la première section d'équipement.

2. Le procédé selon la revendication 1, comprenant en outre le fait (306) de comparer la première estimation de consommation d'énergie à une deuxième estimation antérieure définie pour la première section d'équipement, et le fait (307) de délivrer en sortie le résultat de ladite comparaison.

3. Le procédé selon la revendication 2, comprenant en outre le fait d'utiliser le résultat de la comparaison pour vérifier si la première section d'équipement fonctionne différemment de ce qui est supposé.

4. Le procédé selon l'une quelconque des revendications précédentes, dans lequel le changement détecté est une diminution temporaire de la première grandeur de la consommation d'énergie totale.

5. Le procédé selon l'une quelconque des revendications précédentes, dans lequel le travail de maintenance comprend au moins l'une des opérations suivantes :
changer des dispositifs physiques, modifier les paramètres des dispositifs physiques, ajouter de nouveaux dispositifs physiques.

6. Le procédé selon l'une quelconque des revendications précédentes, dans lequel la réception des valeurs de consommation d'énergie totale comprend le fait de recevoir une pluralité de valeurs par jour pendant une période d'une pluralité de jours.

7. Le procédé selon l'une quelconque des revendications précédentes, comprenant en outre le fait (311) de détecter des travaux de maintenance ayant lieu dans plus d'une section d'équipement, et le fait (320) d'ignorer en réponse le changement détecté de la consommation totale d'énergie.

8. Le procédé selon l'une quelconque des revendications précédentes, dans lequel la détection du changement de la première grandeur de la consommation totale d'énergie est effectuée sur la base d'une comparaison de la valeur de consommation totale d'énergie au premier instant avec une ou plusieurs valeurs de consommation totale d'énergie antérieures.

9. Le procédé selon l'une quelconque des revendications précédentes, dans lequel la détection du changement de la première grandeur de la consommation totale d'énergie comprend le fait d'ignorer les changements dont l'ampleur est inférieure à un seuil (312, 320).

10. Le procédé selon l'une quelconque des revendications précédentes, dans lequel la détection du changement de la première grandeur de la consommation totale d'énergie comprend le fait d'ignorer les changements dont la durée est inférieure à un seuil (313, 320).

11. Le procédé selon l'une quelconque des revendications précédentes, dans lequel la détection du changement de la première grandeur dans la consommation totale d'énergie comprend le fait de confirmer que la consommation totale d'énergie au premier instant est supérieure à 0 (314, 320).

12. Le procédé selon l'une quelconque des revendications précédentes, comprenant en outre le fait (308) de répéter périodiquement le procédé.

13. Un appareil informatique (20, 111) comprenant :
un processeur (21), et
une mémoire (22) comprenant un code de programme informatique ;
la mémoire et le code de programme informatique étant configurés pour, avec le processeur, amener l'appareil informatique à mettre en oeuvre le procédé selon l'une quelconque des revendications 1 à 12.

14. Un programme informatique comprenant un code de programme (23) exécutable par ordinateur qui, lorsqu'il est exécuté par un processeur, amène un appareil informatique (20, 111) à mettre en oeuvre le procédé selon l'une quelconque des revendications 1 à 12.
